# EUROPÄISCHE PATENTSCHRIFT

(11) **EP 4 388 228 B1**
(45) Veröffentlichungstag und Bekanntmachung des Hinweises auf die Patenterteilung: **09.07.2025**
(21) Anmeldenummer: 22755164.5
(22) Anmeldetag: 25.07.2022
(51) Int. Cl.: F16H 57/04

(54) **VORRICHTUNG UND VERFAHREN ZUR BESTIMMUNG EINER TEMPERATUR EINES ÖLS, MIT DEM EIN GETRIEBE EINES FAHRZEUGS GESCHMIERT UND GEKÜHLT WIRD**
DEVICE AND METHOD FOR DETERMINING A TEMPERATURE OF AN OIL BY MEANS OF WHICH A GEAR UNIT OF A VEHICLE IS LUBRICATED AND COOLED
DISPOSITIF ET PROCÉDÉ DE DÉTERMINATION D'UNE TEMPÉRATURE D'UNE HUILE AU MOYEN DE LAQUELLE UNE UNITÉ D'ENGRENAGE D'UN VÉHICULE EST LUBRIFIÉE ET REFROIDIE

(30) Priorität: 18.08.2021 DE 102021209051
(43) Veröffentlichungstag der Anmeldung: 26.06.2024
(73) Patentinhaber: Robert Bosch GmbH, 70442 Stuttgart (DE)
(72) Erfinder: SIVAPRIYA, Subbiah, Coimbatore Tamil Nadu IN-641029 (IN); AUGUSTIN GANDHIRAJ, A, Coimbatore (IN); MIZOBE, Takuya, 71638 Ludwigsburg (DE); ZUCCHINI, Marco, 70839 Gerlingen (DE)
(86) Internationale Anmeldenummer: PCT/EP2022/070805
(87) Internationale Veröffentlichungsnummer: WO 2023/020788

(56) Entgegenhaltungen:
- WO-A1-2019/121183
- WO-A1-2020/213709

## Beschreibung

### Stand der Technik

Die Erfindung betrifft eine Vorrichtung und ein Verfahren zur Bestimmung einer Temperatur eines Öls, mit dem ein Getriebe eines Fahrzeugs geschmiert und gekühlt wird.

Getriebe, insbesondere Getriebe von Fahrzeugen, werden mit Öl geschmiert und gekühlt. Wünschenswert ist es, eine Temperatur des Öls in einem Bereich einzustellen, in welchem die Temperatur niedrig genug ist, um eine ausreichende Qualität des Öls und eine ausreichende Kühlwirkung zu erreichen und in welchem die Temperatur hoch genug ist, um eine Viskosität des Öls und damit einhergehende Verluste im Getriebe gering zu halten. Dazu sind Kenntnisse über die Temperatur des Öls erforderlich.

Eine Möglichkeit, die Temperatur des Öls zu bestimmen, besteht darin, einen Temperatursensor in einem Ölkreislauf, in welchem das Öl zirkuliert, einzusetzen. Die Temperatur wird in diesem Fall mit dem Temperatursensor direkt gemessen.

Die Anmeldung WO 2019/121183 A1 offenbart eine Vorrichtung und ein Verfahren zur Bestimmung einer Temperatur eines Öls.

### Offenbarung der Erfindung

Bei der Vorrichtung und dem Verfahren nach den unabhängigen Ansprüchen entfällt der Temperatursensor im Ölkreislauf.

Das Verfahren zur Bestimmung einer Temperatur eines Öls, mit dem ein Getriebe eines Fahrzeugs geschmiert und gekühlt wird, sieht vor, dass ein physikalisches Modell dazu konfiguriert ist, die Temperatur des Öls abhängig von Eingangsgrößen zu bestimmen, die eine Temperatur eines das Getriebe antreibenden Rotors eines als Elektromaschine ausgebildeten Antriebs des Fahrzeugs, eine Drehzahl des Rotors, ein Drehmoment des Rotors, eine Temperatur eines Stators des Antriebs, eine Temperatur eines Kühlmittels, mit dem das Fahrzeug und/oder der Stator des Antriebs gekühlt wird, einen Volumenstrom des Kühlmittels und eine Umgebungstemperatur des Fahrzeugs charakterisieren, wobei die Eingangsgrößen erfasst und die Temperatur des Öls mit dem physikalischen Modell abhängig von den Eingangsgrößen bestimmt wird. Diese Lösung bringt Ersparnisse gegenüber einer Lösung mit Temperatursensor. Die Ersparnisse sind gegenüber der Lösung mit Temperatursensor reduzierte Kosten und ein gegenüber der Lösung mit Temperatursensor reduzierter benötigter Bauraum insbesondere im Getriebe. Daraus resultiert zudem eine größere Flexibilität für ein Design des Getriebes und des Fahrzeugs. Besonders geeignet ist dieses Vorgehen für eine Antriebsachse, bei welcher der Antrieb, eine Leistungselektronik zum Ansteuern des Antriebs und das Getriebe zusammen in einer Einheit konstruiert sind.

Vorzugsweise wird mit dem physikalischen Modell eine Temperatur des Kühlmittels an einem Auslass eines Kühlsystems für den Antrieb abhängig von einer Temperatur des Stators, der Temperatur des Kühlmittels und dem Volumenstrom des Kühlmittels bestimmt, wobei die Temperatur des Öls abhängig von der Temperatur des Kühlmittels am Auslass und abhängig von der Temperatur des Rotors und abhängig von der Drehzahl des Rotors und abhängig vom Drehmoment des Rotors bestimmt wird. Eine Abhängigkeit der Temperatur des Kühlmittels am Auslass von diesen Eingangsgrößen ist mittels Kennfeldern für ein statisches und ein dynamisches Temperaturinkrement an einem Prüfstand besonders einfach bestimmbar. Dadurch wird das physikalische Modell einfach parametriert.

Vorzugsweise wird mit dem physikalischen Modell eine Umgebungstemperatur in einem Einbauraum des Getriebes abhängig von der Umgebungstemperatur des Fahrzeugs bestimmt, wobei die Temperatur des Öls abhängig von der Umgebungstemperatur im Einbauraum des Getriebes bestimmt wird. Eine Abhängigkeit der Umgebungstemperatur im Einbauraum von der Umgebungstemperatur des Fahrzeugs ist mit Wärmequellen, Massepunkten und zwischen je zwei Massepunkten angeordneten thermischen Widerständen von vorgegebenen Bauteilen des Fahrzeugs gut modellierbar.

Vorzugsweise umfasst das physikalische Modell einen thermischen Widerstand und zwei Massepunkte welche durch den thermischen Widerstand verbunden sind, wobei der thermische Widerstand eine Wärmemenge charakterisiert, die zwischen den zwei Massepunkten ausgetauscht wird, wobei die Umgebungstemperatur im Einbauraum abhängig von einer Wärmemenge bestimmt wird, die vom thermischen Widerstand übertragen wird. Der thermische Widerstand modelliert Wärmebewegungen zwischen den Massepunkten. Der thermische Widerstand kann konstant oder variabel sein. Dadurch wird die Temperatur des Öls mit dem physikalischen Modell genauer bestimmbar. Vorzugsweise wird der thermische Widerstand abhängig von einer Betriebsgröße des Fahrzeugs bestimmt.

Vorzugsweise wird abhängig von der berechneten Temperatur des Öls ein Schutzmechanismus zum Komponentenschutz ausgelöst, wenn die berechnete Temperatur des Öls außerhalb eines vorgegebenen Bereichs liegt oder anderenfalls nicht ausgelöst. Dieser Komponentenschutz bietet ohne den Temperatursensor einen Schutz vor extremen Betriebsbedingungen und verlängert eine Lebensdauer von Komponenten des Getriebes.

Vorzugsweise wird ein Drehmoment des Antriebs, insbesondere der Elektromaschine, zumindest vorrübergehend reduziert, wenn die berechnete Temperatur eine vorgegebene erste Schwelle übersteigt. Dadurch werden Komponenten vor einer zu hohen Temperatur geschützt.

Vorzugsweise wird eine Erhöhung des Drehmoments des Antriebs, insbesondere der Elektromaschine, zumindest vorrübergehend erlaubt, wenn die berechnete Temperatur des Öls eine vorgegebene zweite Schwelle unterschreitet. Dadurch werden die Verluste reduziert, wenn die Öltemperatur bereits niedrig genug ist. Vorzugsweise wird die berechnete Temperatur des Öls in einem Speicher gespeichert. Der Speicher ist ein Datenlogger zur Erfassung der berechneten Temperatur.

Die Vorrichtung umfasst einen Prozessor, der dazu ausgebildet ist, das Verfahren nach einem der oben erwähnten Ausführungsbeispiele durchzuführen, einen Speicher und eine Schnittstelle, wobei der Speicher ein physikalisches Modell umfasst, wobei die Schnittstelle ausgebildet ist, eine Temperatur eines Rotors eines Antriebs des Fahrzeugs, insbesondere einer Elektromaschine, zu empfangen, eine Drehzahl des Rotors zu empfangen, ein Drehmoment des Rotors zu empfangen, eine Temperatur eines Stators des Antriebs zu empfangen, eine Temperatur eines Kühlmittels, mit dem das Fahrzeug und/oder der Stator des Antriebs gekühlt wird, zu empfangen, einen Volumenstrom des Kühlmittels zu empfangen eine Umgebungstemperatur des Fahrzeugs zu empfangen und wobei die Schnittstelle ausgebildet ist, die Temperatur des Öls auszugeben, wobei der Prozessor ausgebildet ist, das Verfahren auszuführen.

Weitere vorteilhafte Ausführungsformen sind der folgenden Beschreibung und der Zeichnung entnehmbar. In der Zeichnung zeigt:
Fig. 1 eine schematische Ansicht eines Fahrzeugs,
Fig. 2 eine schematische Ansicht eines physikalischen Modells,
Fig. 3 eine schematische Ansicht eines ersten Moduls des physikalischen Modells,
Fig. 4 eine schematische Ansicht eines zweiten Moduls des physikalischen Modells,
Fig. 5 Schritte in einem Verfahren nach der Erfindung zur Bestimmung einer Temperatur eines Öls.

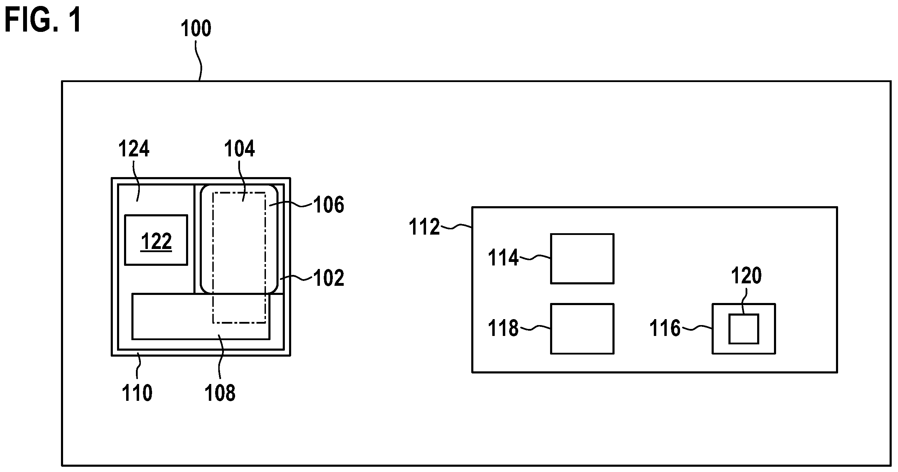

Figur 1 stellt eine schematische Ansicht eines Fahrzeugs 100 dar. Das Fahrzeug 100 umfasst einen Antrieb 102. Im Beispiel ist der Antrieb 102 eine Elektromaschine. Der Antrieb 102 umfasst einen Rotor 104 und einen Stator 106. Das Fahrzeug 100 umfasst ein Getriebe 108. Das Getriebe 108 wird vom Antrieb 102 über den Roter 104 angetrieben. Das Fahrzeug 100 sieht für das Getriebe 108 einen Einbauraum 110 vor. Das Getriebe 108 wird mit Öl gekühlt und geschmiert.

Das Fahrzeug umfasst eine Vorrichtung 112 zur Bestimmung einer Temperatur des Öls.

Die Vorrichtung 112 umfasst einen Prozessor 114, einen Speicher 116 und eine Schnittstelle 118.

Der Speicher 116 umfasst ein physikalisches Modell 120. Das physikalische Modell 120 ist dazu konfiguriert, eine Temperatur des Öls abhängig von Eingangsgrößen zu bestimmen, die eine Temperatur des Rotors 104, eine Drehzahl des Rotors 104, ein Drehmoment des Rotors 104, eine Temperatur des Stators 106, eine Temperatur eines Kühlmittels, mit dem das Fahrzeug 100 und/oder der Stator 106 gekühlt wird, einen Volumenstrom des Kühlmittels und eine Umgebungstemperatur des Fahrzeugs 100 charakterisieren. Das Kühlmittel zirkuliert im Beispiel in einem Kühlsystem für den Antrieb 102. Das Öl zirkuliert im Beispiel in einem Ölkreislauf. Weder im noch am Ölkreislauf ist ein Temperatursensor vorgesehen.

Die Schnittstelle 118 ist ausgebildet die Eingangsgrößen zu empfangen. Beispielsweise werden die Eingangsgrößen über ein Controller Area Netzwerk des Fahrzeugs 100 empfangen. Die Schnittstelle 118 ist ausgebildet, die Temperatur des Öls auszugeben.

Der Prozessor 114 ist ausgebildet ein Verfahren zur Bestimmung der Temperatur des Öls auszuführen, das im Folgenden beschrieben wird.

Der Antrieb 102 und das Getriebe 108 sind im Beispiel mit einer Leistungselektronik 122 in einer Einheit 124 im Einbauraum 110 integriert.

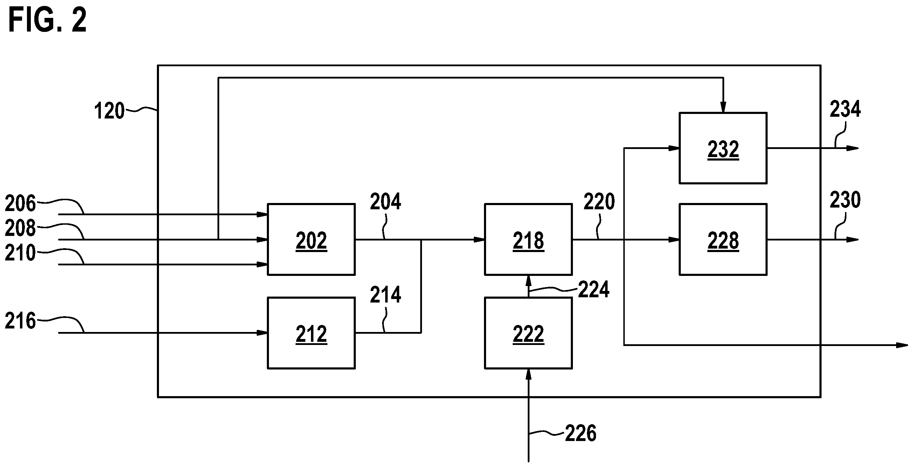

In Figur 2 ist eine schematische Ansicht des physikalischen Modells 120 dargestellt.

Das physikalische Modell 120 umfasst ein erstes Modul 202 das zur Bestimmung einer ersten Ausgangsgröße 204 ausgebildet ist, die Temperatur des Kühlmittels am Auslass des Kühlsystems für den Antrieb 102 charakterisiert. Das erste Modul 202 ist ausgebildet, die erste Ausgangsgröße 204 abhängig von einer ersten Eingangsgröße 206, die die Temperatur des Rotors charakterisiert, einer zweiten Eingangsgröße 208, die die Temperatur des Kühlmittels charakterisiert und einer dritten Eingangsgröße 210, die einen Volumenstrom des Kühlmittels charakterisiert, zu bestimmen.

Das physikalische Modell 120 umfasst ein zweites Modul 212 das zur Bestimmung einer zweiten Ausgangsgröße 214 ausgebildet ist, die die Umgebungstemperatur des Getriebes 108 charakterisiert. Das zweite Modul 212 ist ausgebildet, die zweite Ausgangsgröße 214 abhängig von einer vierten Eingangsgröße 216 zu bestimmen, die die Umgebungstemperatur des Fahrzeugs 100 charakterisiert.

Das physikalische Modell 120 umfasst ein drittes Modul 218 das zur Bestimmung einer dritten Ausgangsgröße 220 ausgebildet ist, die die Temperatur des Öls charakterisiert. Das dritte Modul 218 ist ausgebildet, die dritte Ausgangsgröße 220 abhängig von der ersten Ausgangsgröße 204 und der zweiten Ausgangsgröße 214 zu bestimmen. Im Beispiel wird die dritte Ausgangsgröße 220, d.h. die ohne Temperatursensor im Getriebe 108 oder einem Ölkreislauf für das Öl berechnete Temperatur des Öls, vom physikalischen Modell 120 ausgegeben.

Das physikalische Modell 120 umfasst ein viertes Modul 222 zum Ein- oder Ausschalten des dritten Moduls 218 mit einem Schaltsignal 224, das abhängig von einem Zustand 226 des Fahrzeugs das dritte Modul 218 einschaltet oder ausschaltet. Im Beispiel wird das dritte Modul 218 eingeschaltet, wenn das Fahrzeug 100 betrieben wird und ausgeschaltet, wenn das Fahrzeug 100 nicht betrieben wird oder wenn ein Fehler in einer der Eingangsgrößen für das physikalische Modell 120 erkannt wird.

Das physikalische Modell 120 umfasst ein fünftes Modul 228 zum Auslösen eines Schutzmechanismus abhängig von der dritten Ausgangsgröße 220. Das fünfte Modul 228 ist im Beispiel ausgebildet, einen vierte Ausgangsgröße 230 auszugeben, die einen Schutzmechanismus auslöst oder nicht.

Das fünfte Modul 228 ist ausgebildet, abhängig von dritten Ausgangsgröße 220, die vierte Ausgangsgröße 230 zu bestimmen. Im Beispiel wird eine Drehmomentbegrenzung für das Drehmoment des Antriebs 102 abhängig von der berechneten Temperatur des Öls bestimmt. Dieser Schutzmechanismus zum Komponentenschutz wird im Beispiel ausgelöst, wenn die berechnete Temperatur des Öls außerhalb eines vorgegebenen Bereichs liegt oder anderenfalls nicht ausgelöst. Das Drehmoment des Antriebs 102 wird im Beispiel zumindest vorrübergehend reduziert, wenn die berechnete Temperatur des Öls eine vorgegebene erste Schwelle übersteigt. Eine Erhöhung des Drehmoments des Antriebs 102 wird im Beispiel zumindest vorrübergehend erlaubt, wenn die berechnete Temperatur des Öls eine vorgegebene zweite Schwelle unterschreitet.

Das physikalische Modell 120 umfasst ein sechstes Modul 232 zum Speichern der dritten Ausgangsgröße 220. Beispielsweise wird die Temperatur des Öls im Speicher 106 gespeichert. Im Beispiel wird zudem die zweite Eingangsgröße 208 oder die Temperatur des Kühlmittels, die durch die zweite Eingangsgröße 208 definiert ist, im Speicher 106 gespeichert. Das sechste Modul 232 ist im Beispiel dazu ausgebildet, ein zweidimensionales Histogramm für die dritte Ausgangsgröße 220 und die zweite Eingangsgröße 208 auszugeben.

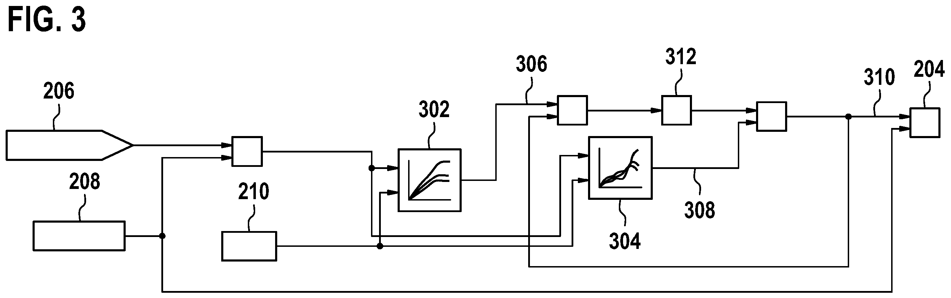

In Figur 3 ist eine schematische Ansicht des ersten Moduls 202 des physikalischen Modells 102 dargestellt.

Im ersten Modul 202 wird eine erste Eingangsgröße für ein erstes Kennfeld 302 und ein zweites Kennfeld 304 abhängig von einer Differenz der ersten Eingangsgröße 206, die die Temperatur des Rotors charakterisiert und der zweiten Eingangsgröße 208, die die Temperatur des Kühlmittels charakterisiert bestimmt.

Eine zweite Eingangsgröße für das erste Kennfeld 302 und das zweite Kennfeld 304 ist die dritte Eingangsgröße 210, die den Volumenstrom des Kühlmittels charakterisiert.

Das erste Kennfeld 302 bildet die Eingangsgrößen auf eine Sollerhöhung 306 der Temperatur des Kühlmittels bei stationären Bedingungen ab.

Das zweite Kennfeld 304 bildet die Eingangsgrößen auf eine Zeitkonstante 308 ab.

Eine Differenz zwischen der Sollerhöhung 306 und einer Isterhöhung 310 wird mit einem Integrierer 312 integriert und durch die Zeitkonstante 308 geteilt, um einen neuen Wert für die Isterhöhung 310 zu bestimmen.

Die erste Ausgangsgröße 204, die Temperatur des Kühlmittels charakterisiert, wird abhängig von einer Summe der Isterhöhung 310 und der zweiten Eingangsgröße 208, die die Temperatur des Kühlmittels charakterisiert, bestimmt.

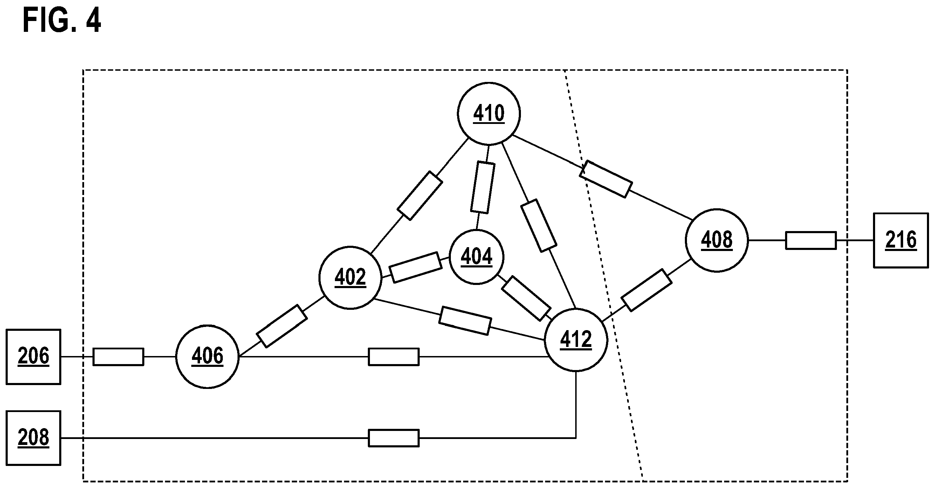

In Figur 4 ist eine schematische Ansicht des zweiten Moduls 212 des physikalischen Modells 102 dargestellt.

Das zweite Modul 212 umfasst einen ersten Massenpunkt 402 für eine Temperatur des Getriebes 108 und einen zweiten Massenpunkt 404 für die Temperatur des Öls.

Das zweite Modul 212 umfasst einen dritten Massenpunkt 406 für eine Temperatur einer Dichtung des Getriebes 108 und einen vierten Massenpunkt 408 für die Umgebungstemperatur des Fahrzeugs 100.

Das zweite Modul 212 umfasst im Beispiel einen fünften Massenpunkt 410 und einen sechsten Massenpunkt 412 für Temperaturen an weiteren Massen des Fahrzeugs 100.

Der erste Massenpunkt 402 und der dritte Massenpunkt 406 sind im Beispiel Wärmequellen. Die Massenpunkte sind im Beispiel durch folgende thermische Widerstände verbunden, die mit Rth X,Y gekennzeichnet sind, wobei X einen Massenpunkt und Y einen anderen Massenpunkt eines Paares von Massenpunkten die durch diesen Widerstand verbunden sind, s einen statischen und v einen variablen thermischen Widerstand kennzeichnet. Für variable Widerstände ist zudem ein Parameter angegeben, der eine Betriebsgröße des Fahrzeugs kennzeichnet, die den Widerstand beeinflusst:
Rth 406, 402, s
Rth 402, 404, v, Drehzahl des Antriebs
Rth 402, 410, v, Drehzahl des Antriebs
Rth 402, 412, v, Drehzahl des Antriebs
Rth 404, 410, v, Drehzahl des Antriebs
Rth 404, 412, v, Drehzahl des Antriebs
Rth 408, 410,
Rth 408, 412, s
Rth 410, 412, s

Das zweite Modul 212 umfasst zudem einen statischen Widerstand zwischen dem dritten Massepunkt 406 und einem ersten Eingang des zweiten Moduls 212 für die erste Eingangsgröße 206, die die Temperatur des Rotors charakterisiert.

Das zweite Modul 212 umfasst zudem einen variablen Widerstand zwischen dem vierten Massepunkt 408 und einem zweiten Eingang des zweiten Moduls 212 für die zweite Eingangsgröße 208, die die Temperatur des Kühlmittels charakterisiert.

Das zweite Modul 212 umfasst zudem einen statischen Widerstand zwischen dem vierten Massepunkt 408 und einem dritten Eingang des zweiten Moduls 212 für die vierte Eingangsgröße 216, die die Umgebungstemperatur des Fahrzeugs 100 charakterisiert.

Die statischen Widerstände zwischen dem vierten Massenpunkt 408 und dem fünften Massenpunkt 410 oder zwischen dem vierten Massenpunkt 408 und dem sechsten Massenpunkt 412, sowie der statische Widerstand, der den vierten Massenpunkt 408 mit dem dritten Eingang des zweiten Moduls 212 verbindet, können abhängig von einer Fahrzeuggeschwindigkeit ausgebildet sein.

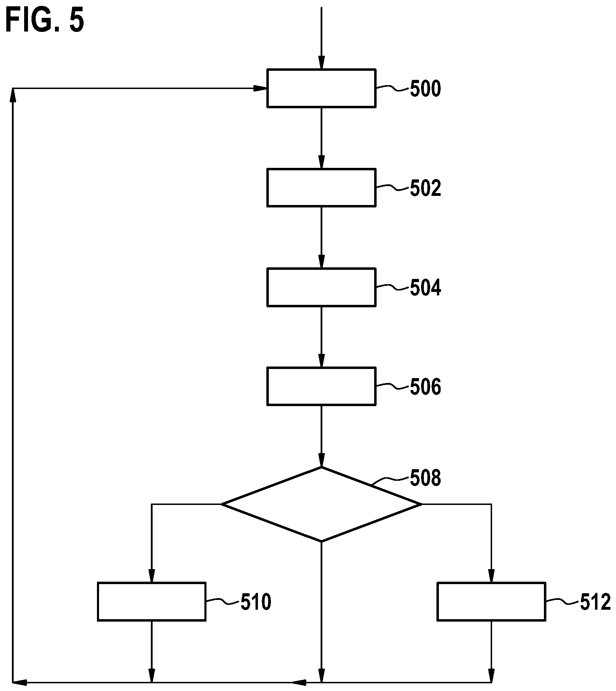

In Figur 5 ist ein Verfahren zur Bestimmung der Temperatur des Öls, mit dem das Getriebe 108 des Fahrzeugs 100 geschmiert und gekühlt wird schematisch dargestellt. Das Verfahren beginnt beispielsweise wenn das Fahrzeug 100 eingeschaltet wird.

In einem Schritt 500 werden die Eingangsgrößen erfasst.

Im Beispiel werden als Eingangsgrößen die Temperatur des Rotors, die Drehzahl des Rotors 104, das Drehmoment des Rotors 104, die Temperatur des Stators 106, die Temperatur des Kühlmittels, der Volumenstrom und die Umgebungstemperatur des Fahrzeugs erfasst.

Anschließend wird ein Schritt 502 ausgeführt.

Im Schritt 502 wird mit dem physikalischen Modell 120 eine Temperatur des Kühlmittels am Auslass des Kühlsystems für den Antrieb 102 bestimmt.

Im Beispiel wird die Temperatur des Kühlmittels am Auslass des Kühlsystems abhängig von der Temperatur des Stators 106, der Temperatur des Kühlmittels und dem Volumenstrom des Kühlmittels bestimmt.

Anschließend wird ein Schritt 504 ausgeführt.

Im Schritt 504 wird mit dem physikalischen Modell 120 eine Umgebungstemperatur im Einbauraum 110 des Getriebes 108 bestimmt.

Im Beispiel wird die Umgebungstemperatur im Einbauraum 110 abhängig von der Umgebungstemperatur des Fahrzeugs 100 bestimmt wird, wobei die Temperatur des Öls abhängig von der Umgebungstemperatur im Einbauraum 110 des Getriebes 108 bestimmt.

Die Umgebungstemperatur im Einbauraum 110 wird im Beispiel abhängig von einer Wärmemenge bestimmt wird, die von wenigsten einem thermischen Widerstand den das physikalische Modell 120 umfasst, übertragen wird.

Der thermische Widerstand wird beispielsweise abhängig von einer Betriebsgröße des Fahrzeugs 100 bestimmt.

Die Betriebsgröße ist beispielsweise eine Fahrzeuggeschwindigkeit oder ein Gang, in dem das Getriebe 108 betrieben wird.

Anschließend wird ein Schritt 506 ausgeführt.

Im Schritt 506 wird die Temperatur des Öls mit dem physikalischen Modell 120 bestimmt.

Es kann vorgesehen sein, dass die berechnete Temperatur des Öls und/oder die Umgebungstemperatur des Fahrzeugs 100, mit der die berechnete Temperatur des Öls bestimmt wurde, im Speicher 116 gespeichert wird.

Im Beispiel wird die Temperatur des Öls abhängig von der Temperatur des Kühlmittels am Auslass und abhängig von der Temperatur des Rotor 104 und abhängig von der Drehzahl des Rotors 104 und abhängig vom Drehmoment des Rotors 104 bestimmt.

Anschließend wird ein Schritt 508 ausgeführt.

Im Schritt 508 wird abhängig von der berechneten Temperatur des Öls ein Schutzmechanismus zum Komponentenschutz ausgelöst, wenn die berechnete Temperatur des Öls außerhalb eines vorgegebenen Bereichs liegt oder anderenfalls nicht ausgelöst. Im Beispiel wird der Komponentenschutz ausgelöst, wenn die berechnete Temperatur des Öls eine vorgegebene erste Schwelle übersteigt. In diesem Fall wird ein Schritt 510 ausgeführt. Im Beispiel wird ein Schritt 512 ausgeführt, wenn die berechnete Temperatur des Öls eine vorgegebene zweite Schwelle unterschreitet. Anderenfalls wird der Schritt 500 ausgeführt.

Im Schritt 510 wird das Drehmoment des Antriebs 102 zumindest vorrübergehend reduziert.

Anschließend wird der Schritt 500 ausgeführt.

Im Schritt 512 wird eine Erhöhung des Drehmoments des Antriebs 102 zumindest vorrübergehend erlaubt.

Anschließend wird der Schritt 500 ausgeführt.

Das Verfahren endet beispielsweise wenn das Fahrzeug 100 ausgeschaltet wird, oder ein Fehler in wenigstens einer der Eingangsgrößen festgestellt wird.

## Patentansprüche

1. Verfahren zur Bestimmung einer Temperatur eines Öls, mit dem ein Getriebe (108) eines Fahrzeugs (100) geschmiert und gekühlt wird, wobei ein physikalisches Modell (120) dazu konfiguriert ist, die Temperatur des Öls abhängig von Eingangsgrößen zu bestimmen, die ein Drehmoment eines das Getriebe antreibenden Rotors (104) eines als Elektromaschine ausgebildeten Antriebs (102) des Fahrzeugs, eine Temperatur eines Stators (106) des Antriebs (102), eine Temperatur eines Kühlmittels, mit dem das Fahrzeug (100) und/oder der Stator (106) des Antriebs (102) gekühlt wird, einen Volumenstrom des Kühlmittels und eine Umgebungstemperatur des Fahrzeugs (100) charakterisieren, wobei die Eingangsgrößen erfasst (500) und die Temperatur des Öls mit dem physikalischen Modell (120) abhängig von den Eingangsgrößen bestimmt wird (502, 504, 506), **dadurch gekennzeichnet, dass** das physikalische Modell (120) dazu konfiguriert ist, die Temperatur des Öls abhängig von Eingangsgrößen zu bestimmen, die zusätzlich eine Temperatur des Rotors (104) des Antriebs (102) des Fahrzeugs und eine Drehzahl des Rotors (104) charakterisieren.

2. Verfahren nach Anspruch 1, **dadurch gekennzeichnet, dass** mit dem physikalischen Modell (120) eine Temperatur des Kühlmittels an einem Auslass eines Kühlsystems für den Antrieb (102) abhängig von einer Temperatur des Stators (106), der Temperatur des Kühlmittels und dem Volumenstrom des Kühlmittels bestimmt wird (502), wobei die Temperatur des Öls abhängig von der Temperatur des Kühlmittels am Auslass und abhängig von der Temperatur des Rotor (104) und abhängig von der Drehzahl des Rotors (104) und abhängig vom Drehmoment des Rotors (104) bestimmt wird (506).

3. Verfahren nach einem der vorherigen Ansprüche, **dadurch gekennzeichnet, dass** mit dem physikalischen Modell (120) eine Umgebungstemperatur in einem Einbauraum (110) des Getriebes (108) abhängig von der Umgebungstemperatur des Fahrzeugs (100) bestimmt wird (504), wobei die Temperatur des Öls abhängig von der Umgebungstemperatur im Einbauraum (110) des Getriebes (108) bestimmt wird (506).

4. Verfahren nach Anspruch 3, **dadurch gekennzeichnet, dass** das physikalische Modell (120) einen thermischen Widerstand und zwei Massepunkte umfasst, welche durch den thermischen Widerstand verbunden sind, wobei der thermische Widerstand eine Wärmemenge charakterisiert, die zwischen den zwei Massepunkten ausgetauscht wird, wobei die Umgebungstemperatur im Einbauraum (110) abhängig von einer Wärmemenge bestimmt wird (504), die vom thermischen Widerstand übertragen wird.

5. Verfahren nach Anspruch 4, **dadurch gekennzeichnet, dass** der thermische Widerstand abhängig von einer Betriebsgröße des Fahrzeugs (100) bestimmt wird (504).

6. Verfahren nach einem der vorherigen Ansprüche, **dadurch gekennzeichnet, dass** abhängig von der berechneten Temperatur des Öls ein Schutzmechanismus zum Komponentenschutz ausgelöst wird wenn die berechnete Temperatur des Öls außerhalb eines vorgegebenen Bereichs liegt oder anderenfalls nicht ausgelöst wird.

7. Verfahren nach einem der vorherigen Ansprüche, **dadurch gekennzeichnet, dass** ein Drehmoment des Antriebs (102), insbesondere der Elektromaschine, zumindest vorrübergehend reduziert wird (510), wenn die berechnete Temperatur des Öls eine vorgegebene erste Schwelle übersteigt (508).

8. Verfahren nach Anspruch 7, **dadurch gekennzeichnet, dass** eine Erhöhung des Drehmoments des Antriebs (102), insbesondere der Elektromaschine, zumindest vorrübergehend erlaubt wird (512), wenn die berechnete Temperatur des Öls eine vorgegebene zweite Schwelle unterschreitet (508).

9. Verfahren nach einem der vorherigen Ansprüche, **dadurch gekennzeichnet, dass** die berechnete Temperatur des Öls in einem Speicher (116) gespeichert wird (506).

10. Vorrichtung (112) zur Bestimmung einer Temperatur eines Öls, mit dem ein Getriebe (108) eines Fahrzeugs (100) geschmiert und gekühlt wird, **dadurch gekennzeichnet, dass** die Vorrichtung (112) einen Prozessor (114), der dazu ausgebildet ist, das Verfahren nach einem der Ansprüche 1 bis 9 durchzuführen, einen Speicher (116) und eine Schnittstelle (118) aufweist, wobei der Speicher (116) das physikalisches Modell (120) umfasst, wobei die Schnittstelle (118) ausgebildet ist, die Temperatur des Rotors (104) des als Elektromaschine ausgebildeten Antriebs (102) des Fahrzeugs (100) die Drehzahl des Rotors (104), das Drehmoment des Rotors (104) , die Temperatur des Stators (106) des Antriebs (102), die Temperatur des Kühlmittels, mit dem das Fahrzeug (100) und/oder der Stator (106) des Antriebs gekühlt wird, den Volumenstrom des Kühlmittels und die Umgebungstemperatur des Fahrzeugs (100) zu empfangen und die Temperatur des Öls auszugeben.

## Claims

1. Method for determining a temperature of an oil with which a gearbox (108) of a vehicle (100) is lubricated and cooled, wherein a physical model (120) is configured to determine the temperature of the oil depending on input variables which characterize a torque of a rotor (104), which drives the gearbox, of a drive (102), which is designed as an electric machine, of the vehicle, a temperature of a stator (106) of the drive (102), a temperature of a coolant with which the vehicle (100) and/or the stator (106) of the drive (102) are/is cooled, a volume flow of the coolant and an ambient temperature of the vehicle (100), wherein the input variables are recorded (500) and the temperature of the oil is determined (502, 504, 506) with the physical model (120) depending on the input variables, **characterized in that** the physical model (120) is configured to determine the temperature of the oil depending on input variables which additionally characterize a temperature of the rotor (104) of the drive (102) of the vehicle and a rotation speed of the rotor (104).

2. Method according to Claim 1, **characterized in that** a temperature of the coolant at an outlet of a cooling system for the drive (102) is determined (502) with the physical model (120) depending on a temperature of the stator (106), the temperature of the coolant and the volume flow of the coolant, wherein the temperature of the oil is determined (506) depending on the temperature of the coolant at the outlet and depending on the temperature of the rotor (104) and depending on the rotation speed of the rotor (104) and depending on the torque of the rotor (104).

3. Method according to either of the preceding claims, **characterized in that** an ambient temperature in an installation space (110) of the gearbox (108) is determined (504) by the physical model (120) depending on the ambient temperature of the vehicle (100), wherein the temperature of the oil is determined (506) depending on the ambient temperature in the installation space (110) of the gearbox (108).

4. Method according to Claim 3, **characterized in that** the physical model (120) comprises a thermal resistance and two earth points, which are connected by the thermal resistance, wherein the thermal resistance characterizes a quantity of heat which is exchanged between the two earth points, wherein the ambient temperature in the installation space (110) is determined (504) depending on a quantity of heat transferred by the thermal resistance.

5. Method according to Claim 4, **characterized in that** the thermal resistance is determined (504) depending on an operating variable of the vehicle (100).

6. Method according to any of the preceding claims, **characterized in that** a protective mechanism for component protection is triggered depending on the calculated temperature of the oil if the calculated temperature of the oil is outside a specified range or otherwise is not triggered.

7. Method according to any of the preceding claims, **characterized in that** a torque of the drive (102), in particular of the electric machine, is at least temporarily reduced (510) if the calculated temperature of the oil exceeds (508) a specified first threshold.

8. Method according to Claim 7, **characterized in that** an increase in the torque of the drive (102), in particular of the electric machine, is at least temporarily permitted (512) if the calculated temperature of the oil falls below (508) a specified second threshold.

9. Method according to any of the preceding claims, **characterized in that** the calculated temperature of the oil is stored (506) in a memory (116).

10. Device (112) for determining a temperature of an oil with which a gearbox (108) of a vehicle (100) is lubricated and cooled, **characterized in that** the device (112) has a processor (114) which is designed to carry out the method according to any of Claims 1 to 9, a memory (116) and an interface (118), wherein the memory (116) comprises the physical model (120), wherein the interface (118) is designed to receive the temperature of the rotor (104) of the drive (102), which is designed as an electric machine, of the vehicle (100), the rotation speed of the rotor (104), the torque of the rotor (104), the temperature of the stator (106) of the drive (102), the temperature of the coolant with which the vehicle (100) and/or the stator (106) of the drive are/is cooled, the volume flow of the coolant and the ambient temperature of the vehicle (100), and to output the temperature of the oil.

## Revendications

1. Procédé pour déterminer la température d'une huile qui sert à lubrifier et refroidir une transmission (108) d'un véhicule (100), un modèle physique (120) étant configuré pour déterminer la température de l'huile en fonction de variables d'entrée, qui sont un couple d'un rotor (104) d'un système d'entraînement (102) du véhicule, conçu sous la forme d'une machine électrique, qui entraîne la transmission, une température d'un stator (106) du système d'entraînement (102), une température d'un liquide de refroidissement qui refroidit le véhicule (100) et/ou le stator (106) du système d'entraînement (102), le débit volumique du liquide de refroidissement et une température ambiante du véhicule (100), les variables d'entrée étant détectées (500) et la température de l'huile étant déterminée (502, 504, 506) au moyen du modèle physique (120) en fonction des variables d'entrée, **caractérisé en ce que** le modèle physique (120) est configuré pour déterminer la température de l'huile en fonction de variables d'entrée qui caractérisent en outre une température du rotor (104) du système d'entraînement (102) du véhicule et une vitesse de rotation du rotor (104).

2. Procédé selon la revendication 1, **caractérisé en ce qu'**avec le modèle physique (120), une température du liquide de refroidissement à une sortie d'un système de refroidissement pour le système d'entraînement (102) est déterminée (502) en fonction d'une température du stator (106), de la température du liquide de refroidissement et du débit volumique du liquide de refroidissement, la température de l'huile étant déterminée (506) en fonction de la température du liquide de refroidissement à la sortie et en fonction de la température du rotor (104) et en fonction de la vitesse de rotation du rotor (104) et en fonction du couple du rotor (104).

3. Procédé selon l'une des revendications précédentes, **caractérisé en ce qu'**une température ambiante dans un espace de montage (110) de la transmission (108) est déterminée (504) au moyen du modèle physique (120) en fonction de la température ambiante du véhicule (100), la température de l'huile étant déterminée (506) en fonction de la température ambiante dans l'espace de montage (110) de la transmission (108).

4. Procédé selon la revendication 3, **caractérisé en ce que** le modèle physique (120) comprend une résistance thermique et deux points de masse qui sont reliés par la résistance thermique, la résistance thermique caractérisant une quantité de chaleur qui est échangée entre les deux points de masse, la température ambiante dans l'espace de montage (110) étant déterminée (504) en fonction d'une quantité de chaleur qui est transmise par la résistance thermique.

5. Procédé selon la revendication 4, **caractérisé en ce que** la résistance thermique est déterminée (504) en fonction d'une variable de fonctionnement du véhicule (100).

6. Procédé selon l'une des revendications précédentes, **caractérisé en ce qu'**en fonction de la température calculée de l'huile, un mécanisme de protection des composants est déclenché lorsque la température calculée de l'huile se situe en dehors d'une plage prédéfinie, ou, dans le cas contraire, n'est pas déclenché.

7. Procédé selon l'une des revendications précédentes, **caractérisé en ce qu'**un couple du système d'entraînement (102), en particulier de la machine électrique, est réduit au moins temporairement (510) lorsque la température calculée de l'huile dépasse (508) un premier seuil prédéfini.

8. Procédé selon la revendication 7, **caractérisé en ce qu'**une augmentation du couple du système d'entraînement (102), en particulier de la machine électrique, est autorisée (512) au moins temporairement lorsque la température calculée de l'huile passe (508) en dessous d'un deuxième seuil prédéfini.

9. Procédé selon l'une des revendications précédentes, **caractérisé en ce que** la température calculée de l'huile est enregistrée (506) dans une mémoire (116).

10. Dispositif (112) pour déterminer la température d'une huile qui sert à lubrifier et à refroidir une transmission (108) d'un véhicule (100), **caractérisé en ce que** le dispositif (112) comprend un processeur (114) qui est conçu pour mettre en œuvre le procédé selon l'une des revendications 1 à 9, une mémoire (116) et une interface (118), la mémoire (116) comprenant le modèle physique (120), l'interface (118) étant conçue pour déterminer la température du rotor (104) du système d'entraînement (102) du véhicule (100) conçu sous la forme d'une machine électrique, la vitesse de rotation du rotor (104), le couple du rotor (104), la température du stator (106) du système d'entraînement (102), la température du liquide de refroidissement avec lequel le véhicule (100) et/ou le stator (106) de l'entraînement est refroidi, le débit volumique du liquide de refroidissement et la température ambiante du véhicule (100), et pour émettre la température de l'huile.
